(19) Europäisches Patentamt / European Patent Office / Office européen des brevets

(11) **EP 4 406 922 A1**

(12) **EUROPÄISCHE PATENTANMELDUNG**

(43) Veröffentlichungstag:
**31.07.2024 Patentblatt 2024/31**

(21) Anmeldenummer: **24154151.5**

(22) Anmeldetag: **26.01.2024**

(51) Internationale Patentklassifikation (IPC):
**C03C 3/085** *(2006.01)* **C03C 3/091** *(2006.01)*

(52) Gemeinsame Patentklassifikation (CPC):
**C03C 3/085; C03C 3/091;** C03C 2204/08

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **30.01.2023 US 202363482060 P**

(71) Anmelder: **SCHOTT Technical Glass Solutions GmbH**
**07745 Jena (DE)**

(72) Erfinder:
• **VON FINTEL, Sandra**
**07745 Jena (DE)**
• **SCHMIDT, Matthias**
**07745 Jena (DE)**
• **WIESEKE, Hubert**
**07745 Jena (DE)**

(74) Vertreter: **Schott Corporate IP**
**Hattenbergstraße 10**
**55122 Mainz (DE)**

(54) **GLASSCHEIBE FÜR DIE VERWENDUNG IN ARCHITEKTURVERGLASUNGEN, SCHEIBENVERBUND UND DEREN VERWENDUNG**

(57)    Die Erfindung betrifft eine Glasscheibe, insbesondere aus einem mittels Heißformung geformten, vorzugsweise gefloatetem Glasband durch Vereinzelung erhaltene Glasscheibe, insbesondere umfassend ein Borosilikatglas, mit einer Länge von wenigstens 1,15 m und einer Breite von wenigstens 0,85 m, mit einer Dicke d von mindestens 0,5 mm, vorzugsweise mindestens 0,7 mm, und höchstens 7 mm sowie deren Verwendungen.

EP 4 406 922 A1

**Beschreibung**

Gebiet der Erfindung

Die vorliegende Anmeldung betrifft eine Glasscheibe für die Verwendung in Architekturverglasungen und einen Scheibenverbund sowie deren Verwendung.

Hintergrund der Erfindung

Glasscheiben können in vielfältigen Anwendungen zum Einsatz kommen, beispielsweise in Fahrzeugscheiben, in Architekturanwendungen oder als Abdeckungen für elektronische Geräte (sogenannte Displayscheiben).

Die internationale Patentanmeldung WO 2018/114956 A1 beschreibt ein Dünnglassubstrat sowie ein Verfahren und eine Vorrichtung zu dessen Herstellung. Im Verfahren zur Herstellung des Dünnglassubstrats wird die Viskosität des Glases gezielt eingestellt. Auch die internationale Patentanmeldung WO 2019/076492 A1 beschreibt ein Dünnglassubstrat, insbesondere ein Borosilikatglas-Dünnglassubstrat sowie ein Verfahren und eine Vorrichtung zu dessen Herstellung, wobei auch hier die Viskosität des Glases im Herstellungsverfahren gezielt eingestellt wird. Beide Anmeldungen offenbaren Verfahren zur Verminderung von beim Heißformen in Ziehrichtung entstehenden länglichen Ziehstreifen und geben Messwerte quer zu dieser Ziehrichtung an.

Die deutsche Patentschrift DE 10 2007 025 687 B3 beschreibt die Verwendung einer Glasscheibe aus Borosilikatglas in einer Flachglasanzeigevorrichtung sowie eine solcherart ausgerüstete Flachglasanzeigevorrichtung.

Die internationale Patentanmeldung WO 2022/115280 A1 offenbart ein Glassubstrat mit verbesserten Mikro-LED-Übertragungseigenschaften, wobei das Glassubstrat eine erste Hauptoberfläche, eine zweite Hauptoberfläche gegenüber der ersten Hauptoberfläche und eine Dicke dazwischen umfasst. Auf der ersten Hauptoberfläche kann eine elektrisch funktionelle Schicht angeordnet sein. Der Glaswafer weist eine Welligkeit mit einer Größenordnung von weniger als oder gleich etwa einem Micrometer auf, in einem räumlichen Wellenlängenbereich von etwa 0,25 mm bis etwa 50 mm.

Die internationale Patentanmeldung WO 2021/216362 A1 beschreibt allgemein und ohne Detaillierung der Substrate Flüssigkristallvorrichtungen mit mindestens zwei Flüssigkristallschichten, mindestens einem Zwischensubstrat, das die Flüssigkristallschichten trennt, und mindestens zwei Ausrichtungsschichten, die auf gegenüberliegenden Oberflächen des Zwischensubstrats angeordnet sind. Ebenfalls offenbart sind Flüssigkristallfenster, die die Flüssigkristallvorrichtungen enthalten. Die internationale Patentanmeldung WO 2021/222161 A1 beschreibt asymmetrische Flüssigkristalltafeln, einschließlich isolierter Verglasungseinheiten und Flüssigkristallfenster, die solche Tafeln enthalten. Eine Flüssigkristallzelle mit dünnem Glas ist in eine asymmetrische dünne Flüssigkristalltafel eingebaut, die eine Scheibe umfasst, die mit der ersten Folie der Flüssigkristallzelle über eine Klebeschicht verbunden ist, die die erste Folie mit der Scheibe verbindet, wobei das Flüssigkristallmaterial steuerbar ist, um eine bestimmte Lichtdurchlässigkeit des Flüssigkristallpanels einzustellen.

Die US-Patentanmeldung US 2002/012160 A beschreibt Glassubstrate für Displayanwendungen.

Für Anwendungen im Architekturbereich, beispielsweise bei Verglasungen von Gebäuden und Gebäudeteilen, ist eine große Robustheit gegen die verschiedensten Einflüsse gefragt. Glas mit seiner mechanischen, thermischen und chemischen Beständigkeit, seinen Transmissionseigenschaften und seiner Strahlenbeständigkeit ist hier gegenüber Kunststoffen im Vorteil.

Für Anwendungen in Architekturverglasungen kommt es insbesondere bei eher großen Formaten der Glasscheiben zu dem Konflikt, dass zum einen trotz der Größe der Scheiben ein geringes Gewicht und zum anderen, insbesondere wenn die Scheibe selbsttragend sein soll, eine ausreichende Stabilität gefordert ist. Während ersteres für möglichst dünne Scheiben spricht, macht letzteres eine Mindestdicke nötig. Verschärft wird der Zielkonflikt dadurch, dass kompakte Bauweisen gewünscht sind und dass für Anwendungen wie Smart-Window-, Switchable-Window-, Privacy-Window-Anwendungen hohe Anforderungen an Oberflächeneigenschaften, insbesondere an die Oberflächen-Feinwelligkeit gestellt werden. Die Einstellung einer ausreichend geringen Oberflächen-Feinwelligkeit ist in hohem Maße von der Herstellung und Heißformgebung und damit auch von der Dicke des Glases abhängig. Die für die jeweilige Heißformgebung nötige Viskositätskurve des Glases ergibt sich aus seiner Zusammensetzung.

Diese vielfältigen und sich teilweise widersprechenden Anforderungen sind von Glasscheiben des Standes der Technik bisher nicht vereint in einem Produkt erfüllt worden.

Aufgabe der Erfindung

Eine Aufgabe der Erfindung besteht daher in der Bereitstellung einer Glasscheibe, welche die vorstehend beschriebenen Nachteile des Standes der Technik vermindert und das geschilderte Anforderungsprofil erfüllt. Ein weiterer Aspekt besteht in der Verwendung dieser Glasscheiben.

Zusammenfassung der Erfindung

Die Aufgabe der Erfindung wird gelöst durch den Gegenstand der unabhängigen Ansprüche. Bevorzugte und spezielle Ausführungsformen finden sich in den abhängigen Ansprüchen und der Beschreibung der vorliegenden Offenbarung.

Die vorliegende Erfindung betrifft eine Glasscheibe, vorzugsweise eine Glasscheibe umfassend ein Borosilikatglas oder aus einem Borosilikatglas. mit einer Länge von wenigstens 1,15 m und einer Breite von wenigstens 0,85 m, mit einer Dicke d von mindestens 0,5 mm, vorzugsweise mindestens 0,7 mm, und höchstens 7 mm, vorzugsweise höchsten 5 mm, umfassend eine Oberseite und eine Unterseite, welche jeweils eine Oberfläche der Glasscheibe definieren, wobei sich diese Oberflächen im Wesentlichen parallel zueinander erstrecken.

Statt der Begriffe Oberseite und Unterseite können synonym die Begriffe erste Seite und zweite Seite verwendet werden.

Handelt es sich um nach dem Floatverfahren hergestellte Glasscheiben, also Floatglasscheiben, wird in der Regel die im Floatverfahren während der Heißformung dem Metallbad, i.a. dem Zinnbad, abgewandte Oberfläche, also die der Floatbad-Atmosphäre zugewandte Oberfläche, als Oberseite bezeichnet und die der dem Zinnbad zugewandten Oberfläche der Glasscheibe als Unterseite.

Die erfindungsgemäße Glasscheibe ist besonders geeignet für die Verwendung in Architekturverglasungen.

Ein wesentliches Merkmal der erfindungsgemäßen Glasscheibe ist ihr Flächengewicht.

Als Flächengewicht wird das Verhältnis von Masse und Fläche einer Schicht oder einer Platte bezeichnet. Die SI-Einheit des Flächengewichts ist $kg/m^2$ Der Wert ist also nicht auf eine bestimmte Dicke normiert, sondern wird nur normiert auf die Fläche unabhängig von der Dicke für einen Quadratmeter des jeweiligen Gegenstands angegeben. Diese Angabe ist gängig bei dünnen Produkten wie Papier oder Pappe. Mit der Angabe des Flächengewichts werden also Produkte verglichen, die sehr ähnliche Dicken haben.

Bei Glasscheiben, deren Dicken über einen großen Bereich schwanken können, ist eine solche Angabe nicht hilfreich. Selbst innerhalb eines Anwendungsbereichs wie z.B. Architekturverglasungen werden Gläser mit Dicken von 0,5 mm bis 7 mm eingesetzt.

Deswegen wird in dieser Offenbarung ein "Flächengewicht (dx)" für eine angegebene Dicke d = x mm verwendet.

Die erfindungsgemäße Glasscheibe weist ein Flächengewicht (d0,7) von höchstens 1,73 auf. Sie weist ein Flächengewicht (d1,5) von höchstens 3,71 und ein Flächengewicht (d5) von höchstens 12,36 auf.

Das nach oben begrenzte Flächengewicht ermöglicht bei gleichem Gewicht größere Dicken als bei Glasscheiben mit höherem Flächengewicht, was eine vorteilhafte Stabilitätssteigerung bedeutet, oder bei gleicher Dicke, also vergleichbarer Stabilität, ein geringeres Gewicht, was für die Benutzung und Handhabung der Produkte, insbesondere bei Transport, Einbau und Montage von Vorteil ist.

Diese Effekte wirken sich bei Verbunden aus zwei oder mehr Scheiben besonders vorteilhaft aus.

Vorzugsweise weist die erfindungsgemäße Glasscheibe ein Flächengewicht (d0,7) von höchstens 1,70 $kg/m^2$, bevorzugt von höchstens 1,62 $kg/m^2$, besonders bevorzugt von höchstens 1,56 $kg/m^2$, ganz besonders bevorzugt von höchstens 1,53 $kg/m^2$,

ein Flächengewicht (d1,5) von höchsten 3,65 $kg/m^2$, bevorzugt von höchstens 3,47 $kg/m^2$, besonders bevorzugt von höchstens 3,35 $kg/m^2$, ganz besonders bevorzugt von höchstens 3,27 $kg/m^2$,
und ein Flächengewicht (d5) von höchstens 12,15 $kg/m^2$, bevorzugt von höchstens 11,55 $kg/m^2$, besonders bevorzugt von höchstens 11,15 $kg/m^2$, ganz besonders bevorzugt von höchstens 10,90 $kg/m^2$, auf.

Vorzugsweise weist die erfindungsgemäße Glasscheibe ein Flächengewicht (d0,7) von wenigstens 1,45 $kg/m^2$, ein Flächengewicht (d1,5) von wenigstens 3 $kg/m^2$ und ein Flächengewicht (d5) von wenigstens 10 $kg/m^2$ auf.

Die erfindungsgemäße Glasscheibe weist eine Oberflächen-Feinwelligkeit auf der Oberseite und/oder der Unterseite von weniger als 200 nm auf.

Die Oberflächen-Feinwelligkeit $W_{fpd}$ wird taktil nach der SEMI D15-1296 "FPD GLASS SUBSTRATE SURFACE WAVINESS MEASUREMENT METHOD" bestimmt. $W_{fpd}$ ist kleiner als 200 nm, bevorzugt kleiner als 150 nm, besonders bevorzugt kleiner als 100 nm, ganz besonders bevorzugt kleiner als 50 nm, wobei eine Untergrenze von 30 nm ausreichend ist.

Vorzugsweise beträgt die Oberflächen-Feinwelligkeit auf der Oberseite und/oder der Unterseite der Glasscheibe also weniger als 150 nm, bevorzugt weniger als 100 nm, besonders bevorzugt weniger als 50 nm.

Die Oberflächen-Feinwelligkeit und die sonstigen Oberflächeneigenschaften sind so gut, dass nach der Herstellung keine mechanische Oberflächennachbehandlung nötig ist. Die Oberflächen-Feinwelligkeit hat sich als aussagekräftig für die Eignung als Raumabgrenzung von Flüssigkristallzellen erwiesen. Die Oberflächen der Oberseite und/oder der Unterseite mit erfindungsgemäßer Oberflächen-Feinwelligkeit verringern optische Verzerrungen und unterstützen kompakte und somit ggf. kostengünstigere Bauweisen der Verglasungen.

Bevorzugte Dicken der Glasscheibe mit einer Dicke d von mindestens 0,5 mm und höchstens 7 mm sind in einer Ausführungsform mehr als 2 mm, bevorzugt wenigstens 3,8 mm, besonders bevorzugt wenigstens 4 mm.

Denn bei diesen als bevorzugt genannten Mindestdicken können solche Glasscheiben besonders einfach als selbsttragende Scheiben in Verglasungen und Scheibenverbunden zum Einsatz kommen.

In einer anderen Ausführungsform der Glasscheibe mit einer Dicke d von mindestens 0,5 mm und höchstens 7 mm sind Dicken d von höchstens 2 mm bevorzugt, von höchstens 1,75 mm besonders bevorzugt und von höchstens 1,5 mm ganz besonders bevorzugt. Eine bevorzugte Dicken-Untergrenze ist > 1 mm.

Mit solchen als bevorzugt genannten Höchstdicken kommen sie bevorzugt in Laminaten zum Einsatz.

Bevorzugte Formate der Glasscheibe mit einer Länge von wenigstens 1,15 m und einer Breite von wenigstens 0,85 m liegen zwischen 2 m x 3 m und 3 m x 4,2 m. Besonders bevorzugt sind Formate von 2,3 m x 3,7 mm bis 2,45 m x 4,2 oder bis 2,45 m x 4 m. Bei den genannten größeren Formaten ab wenigstens 2 m x 3 m kommt der Vorteil der Gewichtsverminderung durch das geringe spezifische Flächengewicht besonders zum Tragen.

Bei den genannten kleineren Formaten herunter bis 1,15 m x 0,85 m ist es ein Vorteil, dass bedingt durch das geringe spezifische Flächengewicht und damit möglicher größerer Äquivalentdicke ein signifikanter Stabilitätsgewinn zu verzeichnen ist.

In bevorzugten Ausführungsformen weist die Glasscheibe eine Dichte von weniger als 2,50 g/cm$^3$, vorzugsweise von höchstens 2,45 g/cm$^3$, bevorzugt von höchstens 2,40 g/cm$^3$, besonders bevorzugt von weniger als 2,38 g/cm$^3$, ganz besonders bevorzugt von höchstens 2,35 g/cm$^3$ oder weniger als 2,32 g/cm$^3$ oder weniger als 2,25 g/cm$^3$ auf. Eine niedrige Dichte fördert das Erreichen des geforderten Flächengewichts.

Vorzugsweise weist die Glasscheibe eine Dichte von mindestens 2,10 g/cm$^3$ auf.

Gemäß einem Aspekt der Erfindung wird eine Glasscheibe, insbesondere aus einem mittels Heißformung geformten, vorzugsweise gefloateten Glasband durch Vereinzelung erhaltene Glasscheibe, bereitgestellt, insbesondere umfassend ein Borosilikatglas, mit einer Länge von wenigstens 1,5 m und einer Breite von wenigstens 1,8 m, mit einer Dicke d von mindestens 0,5 mm, vorzugsweise mindestens 0,7 mm, und höchstens 7 mm, vorzugsweise höchsten 5 mm, umfassend eine Oberseite und eine Unterseite, welche jeweils eine Oberfläche der Glasscheibe definieren, wobei sich diese Oberflächen im Wesentlichen parallel zueinander erstrecken.

Für Verwendungen als Verglasungen, insbesondere als Architekturverglasungen eignen sich die erfindungsgemäßen Glasscheiben in vorteilhafter Weise.

Die erfindungsgemäße Glasscheibe kann durch verschiedene Glastypen realisiert werden, beispielsweise durch alkalifreie Alumino(boro)silicatgläser, sog. AF-Gläser, durch (Lithium)Alumino(boro)silicatgläser, sog. LA(B)S-Gläser, oder durch Borosilicatgläser.

Vorteilhaft ist es, insbesondere hinsichtlich des gewünschten geringen Gewichts, aber auch der Kratzfestigkeit und der chemischen Beständigkeiten wie Laugen-, Säure- oder hydrolytische Beständigkeit der Glasscheibe, wenn diese ein Borosilikatglas umfasst, vorzugsweise die folgenden Komponenten in Gew.-% auf Oxidbasis umfassend:

| | |
|---|---|
| $SiO_2$ | 70 bis 87, bevorzugt 75 bis 85 |
| $B_2O_3$ | 5 bis 25, bevorzugt 7 bis 16 |
| $Al_2O_3$ | 0 bis 6, bevorzugt 1 bis 4 |
| $Na_2O$ | 0,5 bis 9, bevorzugt 0,5 bis 6,5 |
| $K_2O$ | 0 bis 3, bevorzugt 0,3 bis 2,0 |
| $CaO$ | 0 bis 3 |
| $MgO$ | 0 bis 2. |
| $Li_2O$ | 0 bis 5, bevorzugt bis 0 bis 1, besonders bevorzugt 0 bis 0,5 |
| $R_xO_y$ | 0 bis 3, bevorzugt > 0 bis 3, |

wobei R = Sr, Ba, Zn, Ti, Zr, P, Sn, S, Ce, Fe, Nd und $1 \leq X \leq 2$; $1 \leq Y \leq 5$

Mit einem solchen Borosilikatglas werden besonders eine niedrige Dichte, eine gute Kratzfestigkeit und hohe chemische und thermische Beständigkeiten realisiert.

Auch ist es auf diese Weise möglich, Gläser mit einem nur geringen thermischen Ausdehnungskoeffizienten zu erhalten. Der lineare thermische Ausdehnungskoeffizient im Bereich zwischen 20°C und 300°C ($CTE_{20-300}$) beträgt vorzugsweise 2,5 * 10$^{-6}$/K bis 5,5 * 10$^{-6}$/K, bevorzugt jedoch höchstens 5,0 * 10$^{-6}$/K.

Bevorzugt ist es, wenn die Glasscheibe ein Borosilikatglas umfasst, welches die folgenden Komponenten in Gew.-% auf Oxidbasis umfasst:

| | |
|---|---|
| $SiO_2$ | 75 bis 80 |

(fortgesetzt)

| | |
|---|---|
| B$_2$O$_3$ | 8 bis 12 |
| Al$_2$O$_3$ | 2 bis 3 |
| Na$_2$O | 2 bis 3,5 |
| K$_2$O | 2 bis 3 |
| CaO | 2 bis 3 |
| MgO | 1,5 bis 2 |
| R$_x$O$_y$ | 0 bis 3, bevorzugt > 0 bis 3, |

wobei R = Sr, Ba, Zn, Ti, Zr, P, Sn, S, Ce, Fe, Nd und $1 \leq X \leq 2$; $1 \leq Y \leq 5$

Bei Scheiben solcher Zusammensetzungen kommt die wichtige Eigenschaft der thermischen Vorspannbarkeit durch besonders hohe Werte des $\Delta$(CTE$_{liquid}$/CTE$_{20-300}$), also CTE$_{liquid}$ - CTE$_{20-300}$, von mindesten 20 ppm/K besonders vorteilhaft zum Tragen. Dabei bezeichnet CTE$_{liquid}$ den linearen thermischen Ausdehnungskoeffizienten des Glases oberhalb der Glasübergangstemperatur T$_g$.

Ebenfalls bevorzugt ist es, wenn die Glasscheibe ein Borosilikatglas umfasst, welches die folgenden Komponenten in Gew.-% auf Oxidbasis umfasst:

| | |
|---|---|
| SiO$_2$ | 80 bis 83 |
| B$_2$O$_3$ | 12 bis 15 |
| Al$_2$O$_3$ | 1 bis 3 |
| Na$_2$O | 1 bis 4 |
| K$_2$O | 0,5 bis 1,5 |
| CaO | 0 bis 0,5, bevorzugt > 0 bis 0,5 |
| MgO | 0 bis 0,5, bevorzugt > 0 bis 0,5 |
| Li$_2$O | 0 bis 0,5, bevorzugt > 0 bis 0,5 |
| R$_x$O$_y$ | 0 bis 3, bevorzugt > 0 bis 3, |

wobei R = Sr, Ba, Zn, Ti, Zr, P, Sn, S, Ce, Fe, Nd und $1 \leq X \leq 2$; $1 \leq Y \leq 5$

Bei Scheiben solcher Zusammensetzungen kommt die wichtige Eigenschaft der Dichte durch besonders niedrige Werte von weniger als 2,25 g/cm³, insbesondere von höchstens 2,22 g/cm³ besonders vorteilhaft zum Tragen.

Insbesondere, wenn die Scheiben in schaltbaren Fenstern verwendet werden, ist es vorteilhaft, nämlich für die Langlebigkeit der schaltbaren Fenster aufgrund Vermeidung von Alkalienmigration, wenn die Glasscheibe ein AF-Glas umfasst, welches vorzugsweise die folgenden Komponenten in Gew.-% auf Oxidbasis umfasst:

| | |
|---|---|
| SiO$_2$ | 55 bis 65 |
| B$_2$O$_3$ | 5 bis 15 |
| Al$_2$O$_3$ | 15 bis 20 |
| CaO | 0 bis 5, bevorzugt > 0 bis 5 |
| MgO | 0 bis 3, bevorzugt > 0 bis 3 |
| R$_x$O$_y$ | 0 bis 3, bevorzugt > 0 bis 3, |

wobei R = Sr, Ba, Zn, Ti, Zr, P, Sn, S, Ce, Fe, Nd und $1 \leq X \leq 2$; $1 \leq Y \leq 5$

Insbesondere für chemisch vorgespannte Glasscheiben und Scheibenverbunde ist es vorteilhaft, wenn die Glasscheibe ein (L)A(B)S-Glas umfasst, welches vorzugsweise die folgenden Komponenten in Gew.-% auf Oxidbasis umfasst:

| | |
|---|---|
| SiO$_2$ | 60 bis 70 |
| B$_2$O$_3$ | 3 bis 5 |
| Al$_2$O$_3$ | 15 bis 20 |
| Li$_2$O | 3 bis 5 |

(fortgesetzt)

| | |
|---|---|
| $Na_2O$ | 1 bis 5 |
| $K_2O$ | 0 bis 1 |
| CaO | 0 bis 5, bevorzugt > 0 bis 5 |
| MgO | 0 bis 2, bevorzugt > 0 bis 2 |
| $R_xO_y$ | 0 bis 3, bevorzugt > 0 bis 3, |

wobei R = Sr, Ba, Zn, Ti, Zr, P, Sn, S, Ce, Fe, Nd und $1 \leq X \leq 2$; $1 \leq Y \leq 5$

Insbesondere, wenn die erfindungsgemäße Glasscheibe nicht als selbsttragende Scheibe verwendet wird, sondern in einem Laminat, kann sie mit verschiedenen Materialien kombiniert werden, beispielsweise laminiert mit einem Natron-Kalk-Silikatglas, einem Aluminiumsilikatglas, einem Alkalialuminosilikatglas, einem Alkali-Borosilikatglas, einem Alkali-Alumophosphosilikat-Glas, einen Alkali-Aluminoborosilikatglas oder Kombinationen davon, verbunden mit einer Polymerfolie, z.B. PVB, EVA oder TPU.

Das Laminat kann aus identischen Gläsern oder aus unterschiedlichen Gläsern, jedoch mit aneinander angepassten Ausdehnungskoeffizienten, oder aus Glas- und Kunststoff-Scheiben mit aneinander angepassten Ausdehnungskoeffizienten aufgebaut sein.

In einer Ausführungsform weist die Glasscheibe eine Lichttransmission Y (D65,2°) von wenigstens 91 %, vorzugsweise von wenigstens 93 % auf. Vorzugsweise ist dieser Mindestwert bezogen auf eine Glasscheibe mit einer Dicke von 5 mm. Durch die hohe Transparenz wird in besonderem Maße gewährleistet, dass sie den verschiedensten Anwendungen in Architekturverglasungen eine ausgezeichnete und ungestörte Durchsicht ermöglicht.

Die Bezeichnungen Lichttransmission und Helligkeit (brightness) Y entsprechen der gleichen Messgröße, gemessen nach DIN 5033 im CIE Farbsystem als Y(D65, 2°).

In einer Ausführungsform weist die Glasscheibe bei der Wellenlänge 850 nm eine Transmission $T_{@850nm}$ von wenigstens 91 %, vorzugsweise von wenigstens 93 % auf, gemessen mit Normlicht C, 2° an einer feuerpolierten Probe. Vorzugsweise ist dieser Mindestwert bezogen auf eine Glasscheibe mit einer Dicke von 5 mm.

Durch die niedrige Absorption im Nahen IR-Bereich wird in besonderem Maße gewährleistet, dass in Verglasungen mit energiegewinnenden Fenstern ein hoher Wirkungsgrad erzielt wird. Besonders in Systemen, in welchen die Glasscheibe als Waveguide die Photonen zu den außenliegenden Solarzellen leitet, ist eine deutliche Erhöhung der Energieausbeute möglich.

Ein Kriterium für die angesprochene Robustheit der erfindungsgemäßen Glasscheibe ist die Temperaturabschreckfestigkeit (ASF). So weist sie bei 3,8 mm eine Temperaturabschreckfestigkeit (ASF) von wenigstens 170 K (5 %-Fraktil), bevorzugt wenigstens 175 K (5 %-Fraktil) auf.

Die Temperaturabschreckfestigkeit (ASF) wird folgendermaßen bestimmt: Testscheiben von ca. 20 x 20 $cm^2$ werden in einem Ofen auf Prüftemperatur erhitzt und dann mit 50 ml 20 °C kaltem Wasser (Raumtemperatur) in der Scheibenmitte abgekühlt. Die Temperaturmessung erfolgt kontaktfrei mittels Pyrometer. Der ASF-Wert ist dabei die Temperaturdifferenz zwischen der heißen Scheibe und dem kalten Wasser. Dabei dürfen $\leq 5$ % der Testscheiben durch Bruch ausfallen. Um den Oberflächenzustand bei praktischem Gebrauch zu simulieren, werden die Testscheiben vor dem Test mit Schmirgelpapier der Körnung SIC 220 behandelt.

Ein Kriterium für die angesprochene Robustheit der erfindungsgemäßen Glasscheibe ist die Temperaturgradientenfestigkeit (TGF). So weist sie bei 3,8 mm eine Temperaturgradientenfestigkeit (TGF) von wenigstens 110 K ($T_{zug}$) (5 %-Fraktil), und/oder wenigstens 120 K ($T_{heiz}$) (5 %-Fraktil) auf.

Die Temperaturgradientenfestigkeit (TGF) wird folgendermaßen bestimmt: Testscheiben von ca. 25 x 25 $cm^2$ werden im Bereich der Flächenmitte durch programmierte Regelung auf eine bestimmte Temperatur erhitzt, der Scheibenrand wird bei Raumtemperatur gehalten. In einer Testzeit von unter einer Minute findet ein Temperaturanstieg bis zum Bruch statt. Die Temperaturmessung erfolgt kontaktfrei mittels Pyrometer und wird automatisch registriert. Der TGF-Wert bezeichnet den Temperaturunterschied zwischen der heißen Scheibenmitte und dem kalten Scheibenrand. Dabei dürfen $\leq 5$ % der Proben durch Wärmespannungsbruch ausfallen. Um den Oberflächenzustand bei praktischem Gebrauch zu simulieren, werden die Testscheiben vor dem Test mit Schmirgelpapier der Körnung SIC 220 maschinell behandelt.

$T_{zug}$ steht für plötzliche Temperaturzuführung, $T_{heiz}$ für kontinuierliche Aufheizung.

Eine hohe Temperaturgradientenfestigkeit ist besonders vorteilhaft, wenn Temperaturunterschiede in einer Verglasung auftreten, zum Beispiel durch teilweise Abschattung der Glasscheibe oder des Scheibenverbundes durch andere Gebäude oder Bäume.

Vorteilhaft kann die erfindungsgemäße Glasscheibe mit der genannten geringen Oberflächen-Feinwelligkeit hergestellt werden in einem Verfahren zur Herstellung einer Glasscheibe, insbesondere einem Verfahren zur kontinuierlichen Herstellung einer Glasscheibe umfassend die Schritte

- Bereitstellen eines Gemenges umfassend Glasrohstoffe,
- Schmelzen des Gemenges unter Erhalt einer Glasschmelze,
- Einstellen der Viskosität der Glasschmelze,
- Überführen der Glasschmelze in eine Vorrichtung zum Heißformen, insbesondere mittels Floaten unter Bildung eines Glasbandes,
- Vereinzeln des heißgeformten Glasbandes unter Erhalt einer Glasscheibe.

Besonders bevorzugt ist die Glasscheibe nach einer Ausführungsform als Floatglasscheibe ausgebildet. Auf diese Weise kann eine geringe Oberflächen-Feinwelligkeit wenigstens einer Oberfläche einer Seite der Glasscheibe bereitgestellt werden.

Als zur Herstellung der erfindungsgemäßen Glasscheibe verwendetes Verfahren wird beispielhaft das Floatverfahren genannt, die Herstellung ist aber nicht auf ein solches beschränkt.

Die Details des Floatverfahrens und der Anlagen für Floatverfahren sind dem Fachmann bekannt. So sind auch in DE 10 2007 025 687 B3 und in US 2002/012160 A bereits Floatverfahren und ihre Produkte beschrieben. Die letztgenannte Schrift beschreibt auch, wie die Welligkeit des Produktes von der Dicke des heißzuformenden Produktes und den Floatbedingungen beeinflusst wird.

Mit der Erfindung ist es gelungen, ein Produkt mit einer ausreichenden Oberflächenqualität, insbesondere einer geringen Oberflächen-Feinwelligkeit direkt schon während der Heißformung einer Glasscheibe zu erreichen, ohne dass es hierbei einer nachträglichen mechanischen Oberflächenbearbeitung der Glasscheibe bedurfte. Somit beziehen sich die zu den Ausführungsbeispielen angegebenen Daten auf heißgeformte Glasscheiben nach deren Vereinzelung, welche jedoch weder während der Heißformung noch nach der Heißformung zusätzlich zur Heißformung einer Oberflächenbearbeitung unterzogen wurden.

Der allgemeine Begriff der Oberflächenbearbeitung umfasst sowohl die erwähnte mechanische als auch chemische oder thermische Behandlung der Oberfläche, welche insbesondere geeignet ist, die Oberfläche zu glätten oder Erhebungen sowie Vertiefungen auf dieser zu mindern, sowie Verfahren zur Erzeugung von Druck- und/oder Zugspannungen, welche geeignet sind, die Festigkeit der bearbeiteten Oberfläche zu erhöhen, wie beispielsweise thermisches oder chemisches Vorspannen. In bestimmten Ausführungsformen, beispielsweise für Brandschutzverglasungen, kann es jedoch von Interesse sein, die Glasscheibe dem Prozess des chemischen oder thermischen Vorspannens zu unterwerfen.

Dabei ist eine Borosilicatglasscheibe, insbesondere mit den genannten bevorzugten Zusammensetzungsbereichen, besonders gut für das chemische Vorspannen geeignet. Ihr Alkaligehalt ist ausreichend hoch, um eine hinreichende Vorspannung zu erzeugen. Er ist aber auch ausreichend niedrig, um eine Alkalienmigration gering zu halten, was für die Verwendung der Scheiben in schaltbaren Fenstern wesentlich ist. Dies zeigt sich in einer signifikanten Lebenszeitverlängerung des Smart Windows.

Hinsichtlich der unterschiedlichen Dicken weiß der Fachmann die Vorspannprozesse zu adaptieren, insbesondere beim thermischen Vorspannen das Temperatur-Zeit-Profil anzupassen. So existiert für dünnere Dicken ein deutlich engeres Prozessfenster.

Beispiele:

In der Tabelle sind als Beispiel-Scheiben Ausführungsbeispiele (Bezeichnung beginnend mit A) und ein Vergleichsbeispiel (Bezeichnung beginnend mit V) angegeben.

Die Tabelle enthält die Zusammensetzung der Beispiele in Gew.-% auf Oxidbasis. Als "Rest" sind vorher nicht genannte Komponenten, insbesondere $R_xO_y$, wobei R = Sr, Ba, Zn, Ti, Zr, P, Sn, S, Ce, Fe, Nd und $1 \leq X \leq 2$ $1 \leq Y \leq 5$ zusammengefasst.

Die Tabelle enthält weiterhin die folgenden Eigenschaften der Beispiele:

die Dichte $\rho$ in $g/cm^3$,
den Ausdehnungskoeffizienten $CTE_{20-300}$ in $10^{-6}/K$,
den Ausdehnungskoeffizienten $CTE_{liquid}$ in $10^{-6}/K$
und die Differenz $CTE_{liquid} - CTE_{20-300}$ in $10^{-6}/K$,
die Lichttransmission Y (D65,2°) in %, gemessen nach DIN 5033 im CIE Farbsystem an einer Probe einer Dicke von 5 mm bzw. an der Scheibe mit der Dicke des jew. Beispiels,
die Transmission T bei einer Wellenlänge von 850 nm, gemessen mit Normlicht C, 2° an einer feuerpolierten Probe der Dicke 5 mm bzw. an der Scheibe mit der Dicke des jew. Beispiels,
Länge, Breite und Dicke der Scheibe,
die "Flächengewichte (dx)" für die Dicken 0,7 mm (d0,7), 1,5 mm (d1,5) und 5 mm (d5) in $kg/m^2$, wobei zur Ermittlung des jew. Flächengewichtes eine Scheibe der entsprechenden Dicke im Format 50 x 50 $cm^2$ gewogen und das

Ergebnis auf 1 m² umgerechnet wurde oder die Scheibe einer anderen, nämlich der in der Tabelle genannten Dicke verwendet wurde und das Ergebnis auf die gemäß (d0,7), (d1,5) und (d5) betrachtete Dicke umgerechnet wurde;
die Oberflächen-Feinwelligkeit $W_{fpd}$ in nm, die Länge in mm, über die gemessen wurde, die Dicke in mm, bei der gemessen wurde;
die Temperaturabschreckfestigkeit ASF in K (5 %-Fraktil) für Proben mit der jeweils angegebenen Dicke;
die Temperaturgradientenfestigkeit TGF in K (5 %-Fraktil) für Proben mit der jeweils angegebenen Dicke, jew. sowohl bei plötzlicher Temperaturzuführung ($T_{zug}$), als auch bei kontinuierlicher Aufheizung ($T_{heiz}$).

Tabelle 1

| | A1 | A2 | A3 | A4 | A5 | A6 | A7 | A8 | V1 |
|---|---|---|---|---|---|---|---|---|---|
| Zus. [Gew.-%] | | | | | | | | | |
| $SiO_2$ | 72 | 82 | 81 | 81 | 78 | 67 | 67 | 62 | 72 |
| $B_2O_3$ | 25 | 15 | 15 | 13 | 10 | 4 | 10 | - | - |
| $Al_2O_3$ | 1 | 1 | 1 | 2 | 3 | 17 | 11 | 16 | - |
| $Li_2O$ | - | - | - | - | - | 4 | - | - | - |
| $Na_2O$ | 1 | 1 | 3 | 4 | 3 | 2 | - | 12 | 14 |
| $K_2O$ | 1 | 1 | - | 1 | 3 | - | - | 4 | - |
| MgO | - | - | - | - | 2 | 1 | 5 | 4 | 3 |
| CaO | - | - | - | - | 3 | 3 | 6 | - | 10 |
| Rest | 0 | 0 | 0 | 0 | 0 | 2 | 1 | 1 | 0 |
| Summe | 100 | 100 | 100 | 100 | 100 | 100 | 100 | 100 | 100 |
| | | | | | | | | | |
| Dichte [g/cm³] | 2,13 | 2,17 | 2,18 | 2,22 | 2,31 | 2,39 | 2,43 | 2,46 | 2,50 |
| $CTE_{20-300}$ [10⁻⁶/K] | 3,29 | 2,57 | 2,77 | 3,25 | 4,15 | 5,5 | 3,15 | 8,7 | 9 |
| $CTE_{liquid}$ [10⁻⁶/K] | 4,1 | | | 9,7 | 26,7 | | | | |
| $CTE_{liquid}$-$CTE_{20-300}$ [10⁻⁶/K] | 1,97 | | | 6,45 | 22,55 | | | | |
| Y (D65,2°) [%] (bei d = ... mm) | 93 (5,02) | | | 93 (4,91) | 92 (5,00) | | | | 91 (4,89) |
| T 850 nm [%] (bei d = ... mm) | 93 (5,02) | | | 93 (4,91) | 92 (5,00) | | | | 84 (4,89) |
| $W_{fpd}$ [nm] | | | | 38 | 32 | 85 | | 68 | 58 |
| Gem. Länge [mm] | | | | 20 | 20 | 20 | | 20 | 20 |
| Gem. bei einer Dicke d [mm] | | | | 2,25 | 6 (thermisch vorgespannt) | 0,7 | | 0,7 | 0,7 |
| ASF [K] 5%-Fraktil | | | | 192 (3,8) | > 350 | | | | 30 (4) |
| (bei d = ... mm) | | | | | (5) (thermisch vorgespannt) | | | | |
| TGF: $T_{heiz}$ [K] 5%-Fraktil (bei d = ... mm) | | | | 123 (3,8) | > 350 (5) (thermisch vorgespannt) | | | | 40 (4) |

Die Beispiele verdeutlichen sehr schön, dass die Glasauswahl zu unterschiedlichen Flächengewichten führt, was bei gleichem Gewicht für dickere und damit stabilere Produkte (s. Tabelle 2) oder bei gleicher Dicke für leichtere Produkte (s. Tabelle 3) genutzt werden kann.

Tabelle 2

| | A1 | A2 | A3 | A4 | A5 | A6 | A7 | A8 | V1 |
|---|---|---|---|---|---|---|---|---|---|
| Dichte [g/cm³] | 2,13 | 2,17 | 2,18 | 2,23 | 2,31 | 2,39 | 2,43 | 2,46 | 2,5 |
| Dicke [mm] | Flächengewicht kg/m² | | | | | | | | |
| 0,7 | 1,49 | 1,52 | 1,53 | 1,56 | 1,62 | 1,67 | 1,70 | 1,72 | 1,75 |
| 1,5 | 3,20 | 3,26 | 3,27 | 3,35 | 3,47 | 3,59 | 3,65 | 3,69 | 3,75 |
| 5 | 10,65 | 10,85 | 10,90 | 11,15 | 11,55 | 11,95 | 12,15 | 12,30 | 12,50 |

| mögliche Dicke beim Flächengewicht von V1[mm] -> Stabilitätsgewinn gegenüber V1 | | | | | | | | | |
|---|---|---|---|---|---|---|---|---|---|
| 0,82 | 0,81 | 0,80 | 0,78 | 0,76 | 0,73 | 0,72 | 0,71 | 0,70 |
| 1,76 | 1,73 | 1,72 | 1,68 | 1,62 | 1,57 | 1,54 | 1,52 | 1,50 |
| 5,87 | 5,76 | 5,73 | 5,61 | 5,41 | 5,23 | 5,14 | 5,08 | 5,00 |

Tabelle 3

| | A1 | A2 | A3 | A4 | A5 | A6 | A7 | A8 | V1 |
|---|---|---|---|---|---|---|---|---|---|
| Dichte [g/cm³] | 2,13 | 2,17 | 2,18 | 2,23 | 2,31 | 2,39 | 2,43 | 2,46 | 2,5 |
| Dicke [mm] | Flächengewicht kg/m² | | | | | | | | |
| 0,7 | 1,49 | 1,52 | 1,53 | 1,56 | 1,62 | 1,67 | 1,70 | 1,72 | 1,75 |
| 1,5 | 3,20 | 3,26 | 3,27 | 3,35 | 3,47 | 3,59 | 3,65 | 3,69 | 3,75 |
| 5 | 10,65 | 10,85 | 10,90 | 11,15 | 11,55 | 11,95 | 12,15 | 12,30 | 12,50 |

| Gewichtseinsparung gegenüber V1 [%] bei gleicher Dicke (also vergleichbarer Stabilität) | | | | | | | | |
|---|---|---|---|---|---|---|---|---|
| 14,80% | 13,20% | 12,80% | 10,80% | 7,60% | 4,40% | 2,80% | 1,60% |

In einer Ausführungsform der Erfindung bilden wenigstens zwei Glasscheiben, davon wenigstens eine erfindungsgemäße Glasscheibe, vorzugsweise wenigstens zwei erfindungsgemäße Glasscheiben, einen Scheibenverbund.

Ein solcher Scheibenverbund kann aus zwei Glasscheiben bestehen, die über Abstandshalter, beispielsweise sogenannte warm-edge-Abstandshalter, und einem oder mehreren Dichtmitteln verbunden sind.

Ein solcher Scheibenverbund kann auch aus mehr als zwei Glasscheiben bestehen, beispielsweise eine zentrale dritte Scheibe aufweisen.

Der Scheibenverbund mit wenigstens einer erfindungsgemäßen Glasscheibe kann auch aus Glasscheiben, Folien und/oder anderen Materialien laminiert werden, dabei können die Scheiben, die Folien und/oder die anderen Materialien auf eine monolithische Scheibe oder einen Scheibenverbund aufgebracht werden.

Die Glasscheiben des Scheibenverbundes können unterschiedliche Zusammensetzungen und/oder unterschiedliche Dicken und/oder unterschiedliche Oberflächen-Feinwelligkeiten auf ihren Ober- und/oder Unterseiten aufweisen. Die Glasscheiben des Scheibenverbundes können auch dieselbe Zusammensetzung und/oder dieselbe Dicke und/oder dieselben Oberflächenwelligkeiten aufweisen.

Ein Vorteil der Verwendung einer erfindungsgemäßen Scheibe, insbesondere einer Glasscheibe mit derselben Zusammensetzung, sowohl für die Vorder- als auch für die Rückseite einer Anzeigevorrichtung oder eines Smart Windows besteht darin, dass damit mögliche Probleme, die sich aus unterschiedlichen thermischen Ausdehnungskoeffizienten von Vorder- und Rückseitenglas ergeben können, ausgeschaltet werden.

Die Scheiben des Scheibenverbunds können beschichtet sein, beispielsweise auf der Innenseite des durch den Verbund gebildeten Raumes mit einer TCO-Beschichtung. Das Flächengewicht des Scheibenverbundes ergibt sich aus der Summe der Flächengewichte der Einzelscheiben und Verbindungsfolien:

$$grammage_{Verbund} = \delta_1 * d_1 + \cdots + \delta_n * d_n$$

In einer Ausführungsform der Erfindung wird die erfindungsgemäße Glasscheibe oder der Scheibenverbund in Verglasungen, insbesondere in Architekturverglasungen von Gebäuden, für Smart-Window-, Switchable-Window-, Privacy-Window-Anwendungen, insbesondere in "Suspended Particle Devices" (sog. SPD), oder elektrochrome Schichten aufweisend oder für Flüssigkristall-Einheiten, darunter auch sog. PDLC (= "particle dispersed liquid crystal"), verwendet.

Unter dem Fachausdruck "Smart Windows" versteht man "kluge" bzw. "mitdenkende" Fenster - nämlich Fenster mit Verglasungen, die ihre Eigenschaften nach den Bedürfnissen der Nutzer ändern können. So lassen sich Transparenz, Transluzenz, Farbe und Reflexionsgrad je nach den Umwelteinflüssen wie z.B. direkter Sonneneinstrahlung reversibel anpassen. Viele dieser schalt- und regelbaren Verglasungen basieren auf der Anwendung von Flüssigkristallen im Scheibenzwischenraum, also in dem durch den Scheibenverbund gebildeten Raum.

Energiegewinnende Fenster nutzen die Sonnenstrahlung zur Stromerzeugung. Schaltbare Fenster, sogenannte "Switchable Windows", bieten Sonnenschutz und helfen, Energiekosten und $CO_2$-Emissionen zu senken.

Sichtschutzfenster, die sofort von transparent auf durchscheinend wechseln, sogenannte "Privacy Windows", machen Jalousien in Gebäuden überflüssig und sorgen für mehr Privatsphäre.

Verdunkelnde und wärmedämmende Systeme werden bevorzugt durch elektrochrome Vorrichtungen oder "Suspended Particle Devices" realisiert. Sie wechseln im Einsatz von transparent zu dunkel, halten also die Sonne vom Innern des Gebäudes fern und helfen Energiekosten zu senken. Dagegen kommen Flüssigkristalllösungen eher als Privacy-Fenster zum Einsatz. Sie wechseln von durchsichtig zu weiß.

In einer Ausführungsform der Erfindung wird die erfindungsgemäße Glasscheibe oder der Scheibenverbund in Verglasungen, insbesondere Architekturverglasungen von Gebäuden zur Energiegewinnung durch transparente Solarfenster verwendet. In einer weiteren Ausführungsform der Erfindung wird die erfindungsgemäße Glasscheibe oder der Scheibenverbund in Verglasungen, insbesondere Architekturverglasungen als Kombination eingesetzt z.B. indem die Energie der Solarfenster genutzt wird, um schaltbare Fenster zu betreiben.

In einer Ausführungsform der Erfindung wird die erfindungsgemäße Glasscheibe oder der Scheibenverbund in Verglasungen, insbesondere in Architekturverglasungen von Gebäuden, insbesondere für Flüssigkristall-Einheiten, für Smart-Window-, Switchable-Window-, Privacy-Window-Anwendungen, derart verwendet, dass mindestens die der Flüssigkristall-Einheit zugewandte Seite der Glasscheibe oder der Glasscheiben die Oberflächen-Feinwelligkeit von weniger als 200 nm, bevorzugt weniger als 150 nm, besonders bevorzugt weniger als 100 nm, ganz besonders bevorzugt von weniger als 50 nm aufweist.

So kommt ein Vorteil der Erfindung, nämlich die gute Oberflächen-Feinwelligkeit, besonders zum Tragen, da durch sie optische Verzerrungen verringert und kompakte und somit ggf. kostengünstigere Bauweisen der Verglasungen unterstützt werden.

In einer Ausführungsform der Erfindung ist die erfindungsgemäße Glasscheibe oder wenigstens eine Glasscheibe des Scheibenverbunds eine Floatglasscheibe, vorzugsweise aus alkalihaltigem Borosilicatglas, und wird die erfindungsgemäße Glasscheibe oder der Scheibenverbund in Verglasungen, insbesondere in Architekturverglasungen von Gebäuden, insbesondere für Flüssigkristall-Einheiten, für Smart-Window-, Switchable-Window-, Privacy-Window-Anwendungen, und auch für TFT-LCD- und elektrochrome Vorrichtungen derart verwendet, dass die bei dem Floatvorgang zu der Atmosphärenseite des Floatbades weisende Seite der Glasscheibe oder der Glasscheiben der Flüssigkristall-Einheit zugewandt ist.

So kommt ein Vorteil dieser bevorzugten Ausführungsform zum Tragen, der auf dem Fakt beruht, dass bei einem gefloateten alkalihaltigen Glas, insbesondere einem Borosilicatglas, die mit dem Badmetall (in der Regel Zinn) in Berührung gekommene Seite des Glases und die mit der Atmosphäre oberhalb des Floatbades in Berührung gekommene Seite des Glases (Atmosphärenseite) ein unterschiedliches Diffusionsverhalten bezüglich der Alkaliionen aufweisen. Die Alkaliionen auf der Atmosphärenseite des Glases diffundieren nur in einem derart geringen Maß aus der Oberfläche, dass eine solche Glasplatte ohne eine weitere Nachbehandlung zur Reduzierung des Alkaliionen-Gehalts in der Oberfläche als Scheibe in einer Flachanzeigevorrichtung oder als Substrat für Dünnschicht-PV-Zellen verwendet werden kann, wenn sie so verbaut wird, dass ihre Atmosphärenseite zu der elektrisch erregbaren optisch aktiven Schicht hinzeigt. Je nach Endanwendung sind damit keine Passivierungsschichten nötig.

Im folgenden wird beispielhaft der Aufbau eines TFT-LCD Flat Panel Displays mit wenigstens einer erfindungsgemäßen Floatglasscheibe beschrieben. Die Frontscheibe wird durch eine allgemein als Color-Filter-Plate bezeichnete Glasplatte gebildet. Wenigstens sie stellt eine erfindungsgemäße Glasscheibe dar. Den rückwärtigen Abschluss des Bildschirms bildet die als Back Plate bezeichnete Glasscheibe. Auch sie kann als erfindungsgemäße Glasscheibe ausgebildet sein. Zwischen Frontscheibe (Color-Filter-Plate) und Back Plate befindet sich die Flüssigkristallschicht. Der genaue Abstand zwischen den beiden Scheiben wird durch Abstandshalter (Spacer) gewährleistet.

Vorzugsweise ist wenigstens die Frontscheibe so in dem Display angeordnet, dass die nach innen in Richtung auf die Flüssigkristallschicht zeigende Seite die Oberflächen-Feinwelligkeit von weniger als 200 nm aufweist.

Vorzugsweise ist wenigstens die Frontscheibe eine Floatglasscheibe und so in dem Display angeordnet, dass ihre bei der Herstellung nach dem Floatverfahren mit dem Zinnbad in Kontakt gekommene Oberfläche nach außen zeigt, während die bei der Herstellung mit der Atmosphäre über dem Floatbad in Kontakt gekommene Atmosphärenseite der Scheibe nach innen in Richtung auf die Flüssigkristallschicht zeigt.

Frontscheibe und Back Plate sind an ihren Außenseiten mit Polarisatorschichten versehen. Die Frontscheibe trägt auf ihrer Unterseite eine Black Matrix, eine Farbfilterschicht für die Farben Rot, Grün, Blau sowie eine transparente gemeinsame Elektrode (Common Electrode), die üblicherweise aus einer ITO-Schicht besteht. Die Back Plate trägt einen Dünn-Film-Transistor, der eine Pixel-Elektrode ansteuert. Weiterhin ist auf der Frontscheibe und der Back Plate noch jeweils eine sogenannte Orientierungsschicht (Alignment Layer) angeordnet. Zum Rand hin ist das Display mittels einer Dichtung abgedichtet. Die Common Electrode der Frontscheibe ist mittels des Verbinders (Short) mit der gemeinsamen Elektrode (Common Electrode) der Back Plate elektrisch leitend verbunden. Wird die Pixel-Elektrode von dem TFT-Transistor angesteuert, so drehen sich die Flüssigkristalle des betreffenden Pixels in der Flüssigkristallschicht, der betreffende Pixel wird aktiviert.

Die geschilderten Glasscheiben, Scheibenverbunde und Verglasungen können auch Bestandteile von Systemen sein, wie sie für Brandschutzverglasungen bekannt sind.

Es versteht sich, dass die bei den Ausführungsbeispielen für Einzelscheiben geschilderten Vorteile der Erfindung bei Scheibenverbunden besonders zum Tragen kommen.

**Patentansprüche**

1.  Glasscheibe, insbesondere aus einem mittels Heißformung geformten, vorzugsweise gefloatetem Glasband durch Vereinzelung erhaltene Glasscheibe, insbesondere umfassend ein Borosilikatglas, mit einer Länge von wenigstens 1,15 m und einer Breite von wenigstens 0,85 m, mit einer Dicke d von mindestens 0,5 mm, vorzugsweise mindestens 0,7 mm, und höchstens 7 mm, vorzugsweise höchsten 5 mm, umfassend eine Oberseite und eine Unterseite, für die Verwendung in Architekturverglasungen, **gekennzeichnet durch** eine Oberflächen-Feinwelligkeit auf der Oberseite und/oder der Unterseite von weniger als 200 nm und durch ein Flächengewicht (d0,7) von höchstens 1,73 kg/m$^2$, ein Flächengewicht (d1,5) von höchstens 3,71 kg/m$^2$ und ein Flächengewicht (d5) von höchstens 12,36 kg/m$^2$.

2.  Glasscheibe nach Anspruch 1, **gekennzeichnet dadurch, dass** die Oberflächen-Feinwelligkeit auf der Oberseite und/oder der Unterseite weniger als 150 nm, bevorzugt weniger als 100 nm, besonders bevorzugt von weniger als 50 nm beträgt.

3.  Glasscheibe nach einem der vorstehenden Ansprüche, **gekennzeichnet durch** eine Dicke d von mehr als 2 mm, bevorzugt von wenigstens 3,8 mm, besonders bevorzugt von wenigstens 4 mm.

4.  Glasscheibe nach einem der vorstehenden Ansprüche, **gekennzeichnet durch** eine Dicke d von höchstens 2 mm bevorzugt, von höchstens 1,75 mm besonders bevorzugt und von höchstens 1,5 mm ganz besonders bevorzugt.

5.  Glasscheibe nach einem der vorstehenden Ansprüche, **gekennzeichnet durch** ein Flächengewicht (d0,7) von wenigstens 1,45 kg/m$^2$, ein Flächengewicht (d1,5) von wenigstens 3 kg/m$^2$ und ein Flächengewicht (d5) von wenigstens 10 kg/m$^2$ und/oder

    durch ein Flächengewicht (d0,7) von höchstens 1,70 kg/m$^2$, bevorzugt von höchstens 1,62 kg/m$^2$, besonders bevorzugt von höchstens 1,56 kg/m$^2$, ganz besonders bevorzugt von höchstens 1,53 kg/m$^2$,
    ein Flächengewicht (d1,5) von höchsten 3,65 kg/m$^2$, bevorzugt von höchstens 3,47 kg/m$^2$, besonders bevorzugt von höchstens 3,35 kg/m$^2$, ganz besonders bevorzugt von höchstens 3,27 kg/m$^2$,
    und ein Flächengewicht (d5) von höchstens 12,15 kg/m$^2$, bevorzugt von höchstens 11,55 kg/m$^2$, besonders bevorzugt von höchstens 11,15 kg/m$^2$, ganz besonders bevorzugt von höchstens 10,90 kg/m$^2$

**6.** Glasscheibe nach einem der vorstehenden Ansprüche, **dadurch gekennzeichnet, dass** sie eine Lichttransmission Y (D65,2°), gemessen bei einer Dicke d = 5 mm, von wenigstens 91 %, bevorzugt von wenigstens 93 % aufweist.

**7.** Glasscheibe nach einem der vorstehenden Ansprüche, **dadurch gekennzeichnet, dass** sie, gemessen bei einer Dicke d = 5 mm, bei der Wellenlänge 850 nm eine Transmission von wenigstens 91 %, bevorzugt von wenigstens 93 %, aufweist.

**8.** Glasscheibe nach einem der vorstehenden Ansprüche, **gekennzeichnet durch** eine Dichte von weniger als 2,50 $g/cm^3$, vorzugsweise von höchstens 2,45 $g/cm^3$, bevorzugt von höchstens 2,40 $g/cm^3$, besonders bevorzugt von weniger als 2,38 $g/cm^3$, ganz besonders bevorzugt von höchstens 2,35 $g/cm^3$ oder weniger als 2,32 $g/cm^3$ oder weniger als 2,25 $g/cm^3$.

**9.** Glasscheibe nach einem der vorstehenden Ansprüche, **gekennzeichnet durch** eine Dichte von mindestens 2,10 $g/cm^3$.

**10.** Glasscheibe nach einem der vorstehenden Ansprüche, umfassend ein Borosilikatglas umfassend die folgenden Komponenten in Gew.-%:

| | |
|---|---|
| $SiO_2$ | 70 bis 87, bevorzugt 75 bis 85 |
| $B_2O_3$ | 5 bis 25, bevorzugt 7 bis 16 |
| $Al_2O_3$ | 0 bis 6, bevorzugt 1 bis 4 |
| $Na_2O$ | 0,5 bis 9, bevorzugt 0,5 bis 6,5 |
| $K_2O$ | 0 bis 3, bevorzugt 0,3 bis 2,5, besonders bevorzugt bis 2 |
| CaO | 0 bis 3 |
| MgO | 0 bis 2. |
| $Li_2O$ | 0 bis 5, bevorzugt bis 0 bis 1, besonders bevorzugt 0 bis 0,5 |
| $R_xO_y$ | 0 bis 3, bevorzugt > 0 bis 3, |

wobei R = Sr, Ba, Zn, Ti, Zr, P, Sn, S, Ce, Fe, Nd und $1 \leq X \leq 2$; $1 \leq Y \leq 5$

**11.** Glasscheibe nach einem der vorstehenden Ansprüche, **dadurch gekennzeichnet, dass** sie bei 3,8 mm eine Temperaturabschreckfestigkeit (ASF) von wenigstens 170 K (5 %-Fraktil), bevorzugt wenigstens 175 K (5 %-Fraktil) aufweist.

**12.** Glasscheibe nach einem der vorstehenden Ansprüche, **dadurch gekennzeichnet, dass** sie bei 3,8 mm eine Temperaturgradientenfestigkeit (TGF) von wenigstens 110 K ($T_{zug}$) und/oder wenigstens 120 K ($T_{heiz}$) aufweist.

**13.** Glasscheibe nach einem der vorstehenden Ansprüche, **dadurch gekennzeichnet, dass** sie chemisch oder thermisch vorgespannt ist.

**14.** Glasscheibe nach einem der vorstehenden Ansprüche, wobei die Glasscheibe eine Floatglasscheibe ist.

**15.** Scheibenverbund aus wenigsten zwei Glasscheiben, davon wenigstens eine, bevorzugt wenigstens zwei, nach einem der Ansprüche 1 bis 14.

**16.** Verwendung einer Glasscheibe nach einem der Ansprüche 1 bis 4 oder eines Scheibenverbundes nach Anspruch 15 in Verglasungen, insbesondere in Architekturverglasungen von Gebäuden, insbesondere für Flüssigkristall-Einheiten, für Smart-Window-, Switchable-Window-, Privacy-Window-Anwendungen

**17.** Verwendung nach Anspruch 16, wobei mindestens die der Flüssigkristall-Einheit zugewandte Seite der Glasscheibe oder der Glasscheiben die Oberflächen-Feinwelligkeit von weniger als 200 nm, bevorzugt weniger als 150 nm, besonders bevorzugt weniger als 100 nm, ganz besonders bevorzugt von weniger als 50 nm aufweist.

**18.** Verwendung einer Glasscheibe gemäß Anspruch 14 oder eines Scheibenverbundes gemäß Anspruch 15 mit Glasscheiben gemäß Anspruch 14 nach Anspruch 16 oder 17, wobei die bei dem Floatvorgang zu der Atmosphärenseite

EP 4 406 922 A1

des Floatbades weisende Seite der Glasscheibe oder der Glasscheiben der Flüssigkristall-Einheit zugewandt ist.

**EUROPÄISCHER RECHERCHENBERICHT**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/114956 A1 (SCHOTT AG [DE]) 28. Juni 2018 (2018-06-28) | 1-17 | INV. C03C3/085 |
| Y | * Seite 10, Zeilen 13-21; Ansprüche; Abbildungen 15,16 * | 18 | C03C3/091 |
| | * Seite 20, Zeilen 8-12 * | | |
| | * Seite 36, Zeilen 15-30 * | | |
| | * Seite 41, Zeilen 31-33 * | | |
| | * Seite 42, Zeilen 1-15,26-32 * | | |
| | * Seite 58, Zeilen 21-25 * | | |
| | * Seite 69, Zeilen 8-14 * | | |
| | ----- | | |
| X | JP 2018 039688 A (NIPPON ELECTRIC GLASS CO) 15. März 2018 (2018-03-15) * Absätze [0040], [0042], [0044], [0047], [0053]; Ansprüche; Beispiel 3; Tabelle 1 * | 1-12,15 | |
| | ----- | | |
| X | US 2005/000248 A1 (LAUTEN-SCHLAEGER GERHARD [DE] ET AL) 6. Januar 2005 (2005-01-06) * Absätze [0014], [0021], [0025], [0030]; Ansprüche; Beispiele 1-9 * | 1-12,14 | |
| | ----- | | RECHERCHIERTE SACHGEBIETE (IPC) |
| X | US 8 426 327 B2 (YANASE TOMOKI [JP]; MIWA SHINKICHI [JP]; NIPPON ELECTRIC GLASS CO [JP]) 23. April 2013 (2013-04-23) * Spalte 16, Zeilen 1-14; Ansprüche; Beispiele 1-79; Tabellen 1-16 * * Spalte 17, Zeilen 11-23 * | 1,2,4-9, 16,17 | C03C |
| | ----- | | |
| X | US 2018/312425 A1 (ASHTON-PATTON MELISSANN MARIE [US] ET AL) 1. November 2018 (2018-11-01) * Absätze [0035], [0063], [0085], [0086]; Ansprüche; Abbildung 1; Beispiele 1-133; Tabelle 5 * | 1-9,13, 14 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 28. Mai 2024 | Zandonà, Alessio |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2008/145693 A1 (SCHOTT AG [DE]; SCHULTZ NIKOLAUS [DE] ET AL.) 4. Dezember 2008 (2008-12-04) | 18 | |
| A | * Seite 4, Zeilen 1-3; Ansprüche * * Seite 5, Zeilen 12-22 * ----- | 1-17 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 28. Mai 2024 | Zandonà, Alessio |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

Seite 2 von 2

## ANHANG ZUM EUROPÄISCHEN RECHERCHENBERICHT
## ÜBER DIE EUROPÄISCHE PATENTANMELDUNG NR.

EP 24 15 4151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2024

| Im Recherchenbericht angeführtes Patentdokument | Datum der Veröffentlichung | Mitglied(er) der Patentfamilie | Datum der Veröffentlichung |
|---|---|---|---|
| WO 2018114956 A1 | 28-06-2018 | CN 110139752 A | 16-08-2019 |
| | | CN 110312687 A | 08-10-2019 |
| | | CN 111511695 A | 07-08-2020 |
| | | DE 102017124625 A1 | 28-06-2018 |
| | | EP 3558668 A1 | 30-10-2019 |
| | | EP 3558879 A1 | 30-10-2019 |
| | | EP 4209466 A1 | 12-07-2023 |
| | | JP 7208141 B2 | 18-01-2023 |
| | | JP 7315542 B2 | 26-07-2023 |
| | | JP 2020514219 A | 21-05-2020 |
| | | JP 2020537625 A | 24-12-2020 |
| | | JP 2023036947 A | 14-03-2023 |
| | | US 2019308394 A1 | 10-10-2019 |
| | | US 2019308900 A1 | 10-10-2019 |
| | | US 2020238664 A1 | 30-07-2020 |
| | | US 2023191741 A1 | 22-06-2023 |
| | | WO 2018114307 A1 | 28-06-2018 |
| | | WO 2018114956 A1 | 28-06-2018 |
| JP 2018039688 A | 15-03-2018 | JP 6936954 B2 | 22-09-2021 |
| | | JP 2018039688 A | 15-03-2018 |
| US 2005000248 A1 | 06-01-2005 | AT E292097 T1 | 15-04-2005 |
| | | AU 2002351685 A1 | 10-06-2003 |
| | | CA 2466585 A1 | 05-06-2003 |
| | | CN 1589242 A | 02-03-2005 |
| | | EP 1446362 A2 | 18-08-2004 |
| | | IL 161561 A | 19-08-2007 |
| | | JP 4446741 B2 | 07-04-2010 |
| | | JP 2005510440 A | 21-04-2005 |
| | | KR 20040058287 A | 03-07-2004 |
| | | US 2005000248 A1 | 06-01-2005 |
| | | WO 03045862 A2 | 05-06-2003 |
| US 8426327 B2 | 23-04-2013 | JP 5703535 B2 | 22-04-2015 |
| | | JP 2008001589 A | 10-01-2008 |
| | | TW 200804221 A | 16-01-2008 |
| | | US 2009226671 A1 | 10-09-2009 |
| | | WO 2007136054 A1 | 29-11-2007 |
| US 2018312425 A1 | 01-11-2018 | CN 108139058 A | 08-06-2018 |
| | | CN 108349783 A | 31-07-2018 |
| | | EP 3365289 A1 | 29-08-2018 |
| | | EP 3365595 A1 | 29-08-2018 |
| | | JP 6949014 B2 | 13-10-2021 |
| | | JP 7150116 B2 | 07-10-2022 |

Für nähere Einzelheiten zu diesem Anhang : siehe Amtsblatt des Europäischen Patentamts, Nr.12/82

EPO FORM P0461

Seite 1 von 2

**EP 4 406 922 A1**

## ANHANG ZUM EUROPÄISCHEN RECHERCHENBERICHT
## ÜBER DIE EUROPÄISCHE PATENTANMELDUNG NR.

EP 24 15 4151

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2024

| Im Recherchenbericht angeführtes Patentdokument | Datum der Veröffentlichung | Mitglied(er) der Patentfamilie | Datum der Veröffentlichung |
|---|---|---|---|
| | | JP 2018532683 A | 08-11-2018 |
| | | JP 2018532684 A | 08-11-2018 |
| | | JP 2022003011 A | 11-01-2022 |
| | | KR 20180067671 A | 20-06-2018 |
| | | KR 20230085952 A | 14-06-2023 |
| | | PL 3365289 T3 | 29-01-2024 |
| | | TW 201730124 A | 01-09-2017 |
| | | TW 202340111 A | 16-10-2023 |
| | | US 2018305240 A1 | 25-10-2018 |
| | | US 2018312425 A1 | 01-11-2018 |
| | | WO 2017070066 A1 | 27-04-2017 |
| | | WO 2017070500 A1 | 27-04-2017 |
| WO 2008145693 A1 | 04-12-2008 | DE 102007025687 B3 | 08-01-2009 |
| | | WO 2008145693 A1 | 04-12-2008 |

Für nähere Einzelheiten zu diesem Anhang : siehe Amtsblatt des Europäischen Patentamts, Nr.12/82

EPO FORM P0461

Seite 2 von 2

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018114956 A1
- WO 2019076492 A1
- DE 102007025687 B3
- WO 2022115280 A1
- WO 2021216362 A1
- WO 2021222161 A1
- US 2002012160 A